Europäisches Patentamt

European Patent Office

Office européen des brevets

(11) Publication number: **0 393 857**
**A1**

## EUROPEAN PATENT APPLICATION

(21) Application number: **90303200.1**

(51) Int. Cl.⁵: **C09C 1/36, C08K 3/22**

(22) Date of filing: **26.03.90**

| | |
|---|---|
| The title of the invention has been amended (Guidelines for Examination in the EPO, A-III, 7.3). | (71) Applicant: **TIOXIDE GROUP PLC**<br>**Tioxide House 137-143 Hammersmith Road**<br>**London W14 0QL(GB)** |
| (30) Priority: **20.04.89 GB 8908995** | (72) Inventor: **Meldrum, Brian John**<br>**31 Whinfell Avenue, Eaglescliffe**<br>**Stockton on Tees, Cleveland(GB)**<br>Inventor: **Robb, Jenifer Lindsay**<br>**61 Wimpole Road, Fairfield Park**<br>**Stockton on Tees, Cleveland(GB)** |
| (43) Date of publication of application:<br>**24.10.90 Bulletin 90/43** | |
| (84) Designated Contracting States:<br>**BE DE ES FR IT NL** | |
| | (74) Representative: **Wilkinson, John**<br>**Patent Department Central Laboratories**<br>**Portrack Lane**<br>**Stockton on Tees Cleveland(GB)** |

(54) **Coated titanium dioxide particles, process for producing them and their use.**

(57) There is provided a particulate titanium dioxide having a coating of dense amorphous silica on the particles which have an average size of from 0.01 to 0.15 micron. The particles can be spherical or acicular and are absorbant to UV light and transparent to visible light. The particulate material is of value when incorporated in plastics compositions which then have a reduced tendency to degrade as compared to compositions containing uncoated titanium dioxide of similar size.

Films of the plastics compositions are of use as food wrapping.

EP 0 393 857 A1

## PARTICULATE MATERIAL

This invention relates to particulate material and particularly to material which is useful as an absorber for UV light and is transparent to visible light.

Small size particulate titanium dioxide is known to act as an absorber for UV light and also to be transparent to visible light but hitherto such material has bad a tendency to be reactive, particularly in plastics compositions and this can cause premature destruction of the composition or the article formed thereof.

Accordingly an improved product has been developed which has a reduced tendency to react with plastics compositions.

According to the present invention a particulate material comprises particles of titanium dioxide having an average size of from 0.01 to 0.15 micron and having a coating of dense amorphous silica.

The particles of titanium dioxide have an average size of from 0.01 to 0.15 micron and when spherical the diameter of the particles is preferably from 0.01 to 0.03 micron. The particles can be acicular in shape and in this case the largest dimension of the particles is from 0.01 to 0.15 microns, preferably, from 0.02 to 0.1 micron, and the ratio of the largest dimension, to the shortest dimension is from 8:1 to 2:1.

Also while the particles have sizes within the size range hereinbefore specified they do edit a narrow size distribution. For the most preferred particles it is most advantageous that at least 80 per cent by weight have a size within the range of average sizes of 0.01 to 0.15 micron.

The particles of titanium diode of the present invention have a coating of dense amorphous silica. Dense amorphous silica when present in the form of a coating on the particles forms a barrier between the titanium diode particles and the medium in which the titanium diode is dispersed and reduces migration of reactive species from the particles to the medium. Dense amorphous silica is formed under controlled precipitation conditions which are described hereinafter. The particles of the present invention can be coated with widely differing amounts of dense amorphous silica but usually the amount of dense amorphous silica is at least 10 per cent by weight of $TiO_2$ and can be as much as 150 per cent by weight of $TiO_2$. Preferably the amount of dense amorphous silica is from 20 per cent to 115 per cent by weight of $TiO_2$.

The particulate material of the present invention may be formed by any suitable process. Typical processes may involve hydrolysis of an appropriate titanium compound such as titanium tetrachloride or an organic or inorganic titanate or oxidation of an oxidisable titanium compound for example in the vapour state.

A typical process involves the preparation of a solution of a soluble titanium salt which is then hydrolysed to form hydrous titanium oxide. The solution can be that obtained in the so-called "sulphate" process for the manufacture of titanium dioxide pigment in which a titaniferous ore is digested with concentrated sulphuric acid and the digestion cake dissolved in water or dilute acid to produce a solution of titanyl sulphate. During the process additional process stages of classification and reduction are usually employed. Hydrolysis of the titanyl sulphate solution produces the precipitate of hydrous titania which is sometimes called "pulp". Soluble iron compounds remain in solution and after neutralisation and washing to an appropriate degree of impurity level the precipitated hydrous titania is treated to precipitate the specified coating on the particulate product. If desired the hydrous titania can be treated prior to coating with sodium hydroxide and subsequently hydrochloric acid to form an acicular titanium dioxide product.

Usually prior to coating of the particulate product it is preferred to mill the product to an appropriate particle size falling within that specified hereinbefore. Milling conveniently can be effected in a wet milling process employing a grinding medium such as sand which can be separated easily and effectively from the milled product. Milling, can be carried out in the presence of a dispersing agent such as sodium silicate or another dispersant, for example, an organic dispersant.

The particulate produced is then coated with the dense amorphous silica as described hereinafter.

The coated titanium dioxide product is separated from the aqueous dispersion in which it has been prepared and after washing is dried at an elevated temperature of say 70°C to 110°C. In contrast to the usual "sulphate" process for the production of pigmentary titanium dioxide no calcination of hydrous titania is carried out. Consequently it may be that some of the titania used to prepare the product of the invention is present in a hydrous form even after drying.

Alternatively the particles of titania to be used in accordance with the present invention can be prepared by decomposition or hydrolysis of suitable titanium compounds. Typically high temperature hydrolysis of an organic titanium compound such as a titanium alkoxide can be used to produce the fine particle sized titania. Oxidation or hydrolysis in the vapour state of titanium halides under appropriate conditions can also be used to prepare the titania which is then coated.

The coating of dense silica is substantially non-porous, amorphous and continuous over the particle. The coating of dense silica is formed from an alkaline solution and preferably from a solution of a soluble silicate at a pH of at least 8, and most preferably at a pH of from 9 to 11.

The deposition of the dense silica results from the addition of a mineral acid such as sulphuric acid to an alkaline solution of the soluble silicate and titania to hydrolyse the silicate in solution to dense amorphous silica. For instance a solution of a soluble silicate can be mixed with an alkaline slurry or dispersion of the particles of titanium dioxide to be coated and then slowly acidified to deposit dense amorphous silica.

Alternatively there can be added to a slurry or dispersion of the particles of titanium dioxide an alkaline solution of a water soluble silicate and simultaneously a mineral acid to maintain the pH of the slurry at a value of at least 8, say 9 to 10.5 to form and deposit the required dense silica coating.

Generally the temperature of the slurry is maintained at a value of at least 60° C e.g up to 100° C, and preferably from 70° C to 90° C during deposition of dense amorphous silica and the slurry will be stirred to maintain effective coating.

Any suitable water soluble silicate can he used as the source of dense amorphous silica although preferably an alkali metal silicate is employed. Particularly useful are sodium and potassium silicates and preferably, also, the solution of the silicate is freshly prepared.

The products of the present invention have the property of absorbing UV light and transmitting visible light. This means that the products can find use in a wide variety of applications wherein it is important to maintain transparency of visible light while substantially preventing transmission of UV light. The products of the invention are of particular use in plastics compositions, particularly those used to form films.

Generally speaking the coating present on the particles has the effect of affecting the reactivity of the particles in the plastics media and the absorbancy of UV light by the particles is also altered by the presence of the coating. Usually the particle absorbancy is expressed as a function of the amount of the uncoated particle and when expressed as an extinction coefficient is substantially independent of a medium in which the particles are dispersed. However the extinction coefficient is preferably measured at various wave-lengths of light. Generally speaking uncoated particles of the present invention have a minimum extinction coefficient when adequately dispersed of at least 30 litres per gram of uncoated product per cm at a wave-length of 308 nm. Preferably the dispersion has a minimum extinction coefficient of at least 35, and more preferably greater than 40 litres per gram of uncoated product per cm at a wave length of 308 nm.

The products of the present invention can be used in a wide variety of plastics compositions such as in those used to form film material for covering substances such as foods or for use as agricultural films. Compositions based on polyolefines e.g. polyethylene or polypropylene have been found to be particularly useful.

The amount of the product of the invention in the plastics composition will depend on its use but usually the amount from 0.01 per cent to 5.0 per cent of the weight of the composition.

Plastics compositions containing the products of the invention can also be used to form articles which are subjected to outdoor exposure to UV light such as garden furniture.

The invention is illustrated in the following Examples.


## Example 1

Ilmenite was digested with concentrated sulphuric acid. The digestion cake obtained was dissolved in water to form a crude liquor containing iron and titanium sulphates and some suspended insoluble matter. Any iron present in the ferric form was reduced chemically prior to filtering insoluble matter. The liquor after any necessary crystallisation and filtration was concentrated by vacuum treatment and then hydrolysed to precipitate hydrous titanium dioxide by boiling. The product on filtering was a pulp of uncoated hydrous $TiO_2$.

In the subsequent process any water added or used was taken to be demineralised water.

The pulp of the uncoated hydrous $TiO_2$ obtained was diluted to a concentration of 280 grams per litre $TiO_2$ and a sample amount of 2.5 litres taken and heated to 60° C. Aqueous sodium hydroxide solution containing 700 grams per litre NaOH in an amount of 1.5 litres was heated to 90° C and then transferred to a reaction flask having a volume of 5 litres fitted with a condenser. The hot diluted pulp was added over a period of 30 minutes to the reaction flask whilst agitating the contents vigorously and the mixture temperature was held at 117° C whilst agitating for a period of 2 hours after the addition had been completed. Cold water was added to quench the solution in the flask to 90° C and to decrease the concentration of titanium dioxide to 140 grams per litre. The amount of water added was approximately 20% of the total volume achieved. The contents were agitated for a further 15 minutes at this temperature of 90°C prior to cooling to a temperature of 50 to 55°C by the addition of a further amount of cold water which reduced the concentration of titanium dioxide to about 80 to 90 grams per litre. The dispersion was filtered and the filter cake washed with warm water at a temperature of 50°C to 60°C so that the filtrate contained less than 1500 ppm $Na_2O$. The washed filter cake was then reslurried in water to a concentration of 200 grams per litre $TiO_2$ and at this stage the product was sodium titanate.

Two litres of the washed sodium titanate was added to a reaction flask having a volume of 6 litres and fitted with a condenser. The pH of the dispersion in the flask was reduced to a value within the range 2.8 to 3.1 by the addition of aqueous hydrochloric acid (30% w/w) and the mixture then heated to a temperature of 60°C at the rate of 1°C per minute. The pH of the mixture was rechecked and adjusted, as necessary, to a value within the range 2.8 to 3.1 by a further addition of the aqueous hydrochloric acid. The dispersion was held at this temperature for 30 minutes whilst agitated. A further quantity of hydrochloric acid was then added such that the volume added was 0.754 litres of 30% HCl acid per kilogram of $TiO_2$ in the dispersion such that the ratio of $HCl/TiO_2$ equalled 0.26. The slurry was then heated to its boiling point over a period of 40 minutes and held at its boiling point for a period of 90 minutes whilst being agitated. The treated product was then quenched by addition of two litres of water and the dispersion had a pH value of 0.4. Sodium hydroxide solution at a concentration of 400 grams per litre NaOH was then added to neutralise the dispersion to a pH of 7.5 and approximately 460 ml of the aqueous sodium hydroxide was required. The dispersion was filtered and the filter cake washed with two litres of water. The washed filter cake was then redispersed with a further quantity of two litres of water and filtered again to produce a filter cake having a solids content of 34% by weight.

882 grams of the filter cake (300 grams $TiO_2$) was diluted to a concentration of 100 grams per litre $TiO_2$ with demineralised water and mixed with sodium silicate in an amount equivalent to 5% by weight $SiO_2$ on weight of $TiO_2$ and milled in a sand mill for 2 hours after adjusting the pH of the dispersion to 10.0 to 11.5 with aqueous sodium hydroxide. The grinding medium was Ottowa sand and was removed from the milled dispersion at the end of the milling period by filtration.

The aqueous dispersion after removal of the sand had a pH of 9.4 and was heated to 70°C and maintained at this during the coating operation.

To the stirred dispersion aqueous sodium silicate solution (150 grams per litre $SiO_2$ equivalent) was added dropwise in an amount sufficient to introduce sodium silicate in an amount equivalent to 90% $SiO_2$ on weight of $TiO_2$ over a period of 5 hours. At the same time sulphuric acid was co-added in order to maintain the overall pH of the solution between 8.5 - 9.5. Approximately 3067 mls of sodium silicate solution and 1084 mls $H_2SO_4$ were added. After the addition had been completed the dispersion had a pH of 8.5 and was allowed to age for 30 minutes at 70°C whilst stirring was maintained.

Sulphuric acid (10%) was added to the aqueous dispersion to reduce the pH to 7.0. the neutralised dispersion was aged for 30 minutes whilst being stirred. The dispersion was filtered to produce a filter cake of the coated product which was then washed with 1 litre of demineralised water. The cake was redispersed in 1 litre of demineralised water, refiltered and then washed again with demineralised water.

The product was dried overnight at 110°C. The product was acicular rutile titanium dioxide having an average size of 0.02 x 0.10 microns with a coating of dense amorphous $SiO_2$ in an amount equivalent to 90% on $TiO_2$.

A sample of the dried product was prepared in the form of a polymer masterbatch containing 10% by weight of the product and polyethylene (Alkathene 017/064) by melt mixing at 120°C in a mixer known as a Brabender Plasti-Corder. Polypropylene (BP DYNH-3) was then added to the masterbatch by melt mixing at 170°C to 1 part per hundred resin (pHr) and 50 microns thick films extruded.

The absorbance of UV and visible light by the films was measured directly and were as follows:-

| A (524 nm) | A (308 nm) | A (Max) | Wavelength (Max) |
|---|---|---|---|
| 0.05 | 0.93 | 0.96 | 301 |

These films were then subjected to a programme of accelerated weathering using a Single Arc Marr weatherometer with the estimated time to 50% loss of tensile strength for each film being measured using an INSTRON 1640 Universal Testing instrument.

A value of 1275 hours to reach 50% loss of tensile strength for such films compares favourably with 1000 hours for a polypropylene film to which no fine particulate $TiO_2$ has been added. When the $TiO_2$ of Example 1 was replaced by $TiO_2$ with a similar particle size and similar UV absorbance but without a coating of dense amorphous silica the time to reach 50% loss of tensile strength was only 300 hours.

## Example 2

The experiment described in Example 1 was repeated except that the product was coated with dense amorphous silica in an amount equivalent to 70% by weight $SiO_2$ on $TiO_2$. This material was then further treated with 3% by weight silicone oil on coated $TiO_2$. The product was dried overnight at 110°C.

A sample of the dried product was prepared in the form of a polymer masterbatch in a similar manner to that described in Example 1 and 50 microns thick films were again extruded.

The absorbance of UV and visible light by the films was measured directly and were as follows:

| A (524 nm) | A (308 nm) | A (Max) | Wavelength (Max) |
|---|---|---|---|
| 0.10 | 0.98 | 0.98 | 299 |

These films were then subjected to a programme of accelerated weathering in a similar manner to that described in Example 1.

A value of 850 hours to reach 50% loss of tensile strength for such films was found to be less than that found for polypropylene film to which no fine particulate $TiO_2$ has been added (1000 hours) but much greater than the value of 300 hours observed for polypropylene films containing a similar quantity of uncoated $TiO_2$ with similar optical properties.

## Claims

1. A particulate material comprising coated particles of titanium dioxide having an average size of from 0.01 to 0.15 micron characterized in that the coating is of dense amorphous silica.

2. A particulate material according to claim 1 charactized in that at least 80 per cent by weight of the particles have a size of from 0.01 to 0.15 micron.

3. A particulate material according to claim 1 or 2 characterized in that the particles are spherical in shape and have a diameter of from 0.01 to 0.03 micron.

4. A particulate material according to claim 1 or 2 characterized in that the particles are acicular in shape having a largest dimension of from 0.01 to 0.15 micron and a shortest dimension whereby the ratio of the said largest dimension to said shortest dimension is from 8:1 to 2:1.

5. A particulate material according to any one of the preceding claims characterized in that the amount of said dense amorphous silica is from 10 to 150 per cent by weight of $TiO_2$.

6. A particulate material according to any one of the preceding claims characterized in that the amount of dense amorphous silica is from 20 per cent to 115 per cent by weight of $TiO_2$.

7. A method for the production of a particulate material which comprises forming an aqueous dispersion containing particulate titanium dioxide and a water-soluble silicate, adding a mineral acid to said dispersion while maintaining the pH of the dispersion during the addition at a value of at least 8 at a rate of addition such as to deposit a coating of dense amorphous silica on said particulate titanium dioxide characterized in that the titanium dioxide has an average size of from 0.01 to 0.15 micron.

8. A method according to claim 7 characterized in that the pH is maintained at a value of from 9 to 11.

9. A method according to claim 7 or 8 characterized in that an aqueous solution of a water-soluble silicate is added to an aqueous dispersion of said particulate titanium dioxide simultaneously with said mineral acid.

10. A method according to claim 7, 8 or 9 characterized in that the aqueous dispersion is maintained at a temperature of at least 60°C.

11. A plastics composition comprising a polymeric material and dispersed therein particles of titanium dioxide characterized in that the particles have an average particle size of from 0.01 to 0.15 micron and have a coating on the particles of dense amorphous silica.

12. A plastics composition according to claim 11 characterized in that the amount of the particles of titanium dioxide is from 0.01 per cent to 5.0 per cent by weight of the composition.

13. A plastics film comprising a polymeric material having dispersed therein particles of titanium dioxide characterized in that the particles have an average particle size of from 0.01 to 0.15 micron and have a coating on the particles of dense amorphous silica.

European Patent Office

# EUROPEAN SEARCH REPORT

Application Number

EP 90 30 3200

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-78633 (TIOXIDE GROUP)<br>--- | | C09C1/36<br>C08K3/22 |
| A | US-A-4075031 (A. ALLEN)<br>---- | | |
| A | US-A-3329484 (R.S. LONG ET AL.)<br>--- | | |
| A | US-A-2885366 (R.K. ILER)<br>----- | | |
| | | | **TECHNICAL FIELDS SEARCHED (Int. Cl.5 )** |
| | | | C09C |

The present search report has been drawn up for all claims

| Place of search | Date of completion of the search | Examiner |
|---|---|---|
| THE HAGUE | 24 JULY 1990 | VAN BELLINGEN I. |